# EUROPEAN PATENT SPECIFICATION

(11) **EP 0 923 876 B1**
(45) Date of publication and mention of the grant of the patent: **09.05.2001**
(21) Application number: 99200464.8
(22) Date of filing: 19.02.1999
(51) Int. Cl.: A23G 1/21, A23G 1/20

(54) **Apparatus for the production of shells of fat-containing, chocolate-like masses**
Vorrichtung zur Herstellung von Schalen aus fetthaltigen, schokoladeähnlichen Massen
Appareil pour la fabrication de coques en masses contenant des matières grasses , du type chocolat

(30) Priority: 02.11.1998 EP 98203693; 09.11.1998 EP 98203783
(43) Date of publication of application: 23.06.1999
(73) Proprietor: AASTED-MIKROVERK APS, 3520 Farum (DK)
(72) Inventor: Aasted, Lars, 2920 Charlottenlund (DK)
(74) Representative: Heiden, Finn

(56) References cited:
- EP-A- 0 589 820
- EP-A- 0 715 813
- AU-B- 532 845
- DE-C- 19 720 844

## Description

The present invention concerns a method for the production of fat-containing, chocolate-like masses, in particular for chocolate articles, by which an amount of liquid mass is deposited into at least one mould cavity, whereafter at least one associated core member is immersed into the mass to form the articles.

Systems for moulding of shells of fat-containing, chocolate-like masses through immersion of a core members into the liquid mass of an associated cavity and thereby bringing the mass into the desired shape are today well-known within the prior art, and are being used extensively by the chocolate making industry.

EP 0 589 820 A1 (AASTED-MIKROVERK APS) describes the first commercially available method and associated apparatus of the displacing type for industrial use. It relates to a method, where the chocolate-like mass under crystallisation solidifies from the mould cavity and inwardly to form the outer shape of the shell, the temperature of the mould cavity being lower than the temperature of the tempered mass, that a cooling member having a temperature lower than 0°C is immersed into the mass and kept in the mass in a fully immersed position for a predetermined period of time. The cooling member is furthermore immersed immediately into the mass after this has been filled into the mould cavity. The associated apparatus furthermore comprises means for controlling the up- and down movement of the cooling members, as well as controlling residence times in the fully immersed position.

Generally within the present field, chocolate-like masses are suspensions of non-fat particles, such as sugar, milk powders and cocoa solids in a liquid fat phase. The fat phase in most cases comprises an extent of the genuine cocoa butter of until around 30 %, but may comprise substitutes as well. Such substitutes may be in the form of other types of fat-containing oils. Chocolate-like masses where the cocoa butter has been replaced wholly or partly by other fats, are often named commercially as compound chocolate, in which the cocoa butter has been replaced by palm-kernel oil, or corresponding oils.

In the subsequent treatment of the ready-finished shell, the shell is frequently provided with a centre mass of a creamy or liquid food material, which differs from that of the shell. Thereafter the shell is closed either with other shell parts along the periphery of the shell or by means of a coating.

Furthermore it is possible to join a produced shell with other types of shells immediately after being moulded, so that the finished food article being present as a hollow body e.g. in the form of eggs or figures, such as pixies and the like.

Furthermore, it should be mentioned that manufactured shells do not have to consist of just one layer of material but may e.g. consist of several layers of chocolate-like material. For example, one shell made of dark chocolate may be provided with an interior coating of white chocolate (or vice versa) by the same method and system even before the shell moulded first leaves the mould cavity.

The chocolate-like masses are deposited into the mould cavity in a tempered liquid state. For several decades, the technique of providing tempered chocolate-like masses has been well known to the persons skilled within the art of chocolate-making. Chocolate-like mass being heated to 40-50°C enters the process of tempering in which the mass in cooled down to around 27-32°C, whereby crystallisation is initiated. Thereafter, the chocolate-like mass is re-heated, normally not more than 2°C providing the ready-tempered chocolate-like mass with a content of stable β crystals in an amount lesser than 5 %. Thereby lower melting crystals are re-melted, so that only stable crystals remain in the ready-tempered mass. Such a process is for example performed by the AMK-tempering machines provided by Aasted-Mikroverk ApS, Denmark.

The quality of the ready-moulded chocolate shells has always been determined firstly by the state of the tempered chocolate mass. The skilled person knew that good flavour and mouth feeling chocolate, high gloss, high resistance to fat bloom as well as enhanced resistance to warm or heat was the consequence of the optimum tempering state, in which the liquid chocolate comprises only stable β crystals, especially small crystals before being deposited into the mould. However, before the invention of EP 0 589 820 B1 (AASTED-MIKROVERK APS), the skilled person thought that the setting of the deposited chocolate in the mould should be gentle and time consuming to an extent of often ½ - 1 hour before the moulded shell could be released from the mould cavity. By the invention of EP 0 589 820 B1 this prejudice was turned upside down, thereby discovering a method by which the deposited tempered chocolate was set rapidly e.g. typically within 10 seconds providing tremendous fast production rates for chocolate making industry.

WO 95/32633 (AASTED-MIKROVERK APS) describes a method and a system of the displacing type, by which an engagement ring is mounted peripherally around the cooling member by a press-fit or by threaded engagement. The engagement ring comprises at least one peripherally extending recess defining the moulded shell rim to compensate for inaccuracies in the deposited amount of chocolate. By depositing larger amounts of tempered chocolate-like mass into the mould cavity than the volume being available when the cooling member is fully immersed, liquid mass will escape at the upper surface of the mould cavity and be taken up in the recess. Thereby, complete articles with a well-defined rim can be manufactured.

WO 98/52425 (KMB PRODUCTIONS AG) discloses a system for moulding of shells primarily for moulding of chocolate shells. This system comprises multiple core members firmly fixed to a holding device. Cooling of the core members is provided through channels in the core members and in the plate, on which they are firmly secured. Since the core members are firmly fixed it is not possible to lower the individual core members to different depths relative to the plate, on which they are secured.

EP 0 715 813 (GEBR. BINDLER) discloses a similar system for moulding of chocolate articles, especially for chocolate shells, through displacement of the chocolate mass in a mould by immersion of a core member. The disclosed embodiments all have a multiplicity of core members firmly fixed to the same holding device. As in the above WO 98/524255 publication, the system has no way of compensating for inaccuracies in the dosage of chocolate or for differences in the depth of the individual mould cavities. Thus, if for some reason, one of the mould cavities of a mould element is clogged and the associated core cannot be immersed further than the depth of the obstruction, all the fixed cores will be halted and consequently all the shells of that mould element will be incomplete.

In practise, it is not possible to manufacture mould elements where all the mould cavities have exactly the same size, especially depth. Furthermore, it is not possible to achieve exact dosage of the chocolate when it is deposited into the mould cavities. Consequently, when several core members that are firmly fixed to the same holding device are lowered into the mould cavities the resulting displacement of chocolate will give rise to shells of different size.

The purpose of the present invention is to provide a simple, robust, flexible, and efficient system for moulding chocolate articles.

The present invention relates to a system for the production of shells of fat-containing, chocolate-like masses, in particular for chocolate articles, comprising at least one mould cavity to receive the mass, at least one core member to be immersed into the mass, a holding device adapted to engage the at least one core member, wherein at least one channel is provided in the holding device, in which temperature controlling medium flows, and whereby the core members have sliding surfaces that are supported by opposite sliding surfaces of the holding device.

The great advantage of the invention is that it provides a very simple and robust system for transmitting heat energy from the chocolate mass to the temperature controlling medium yet having an unforeseen efficiency. Energy is transferred from the warm chocolate via the core members, the sliding surfaces between the core members and the holding device, into the temperature controlling medium in the at least one channel in the holding device. Thereby is avoided the need for bringing the temperature controlling medium in direct contact with the core members, which process would require the manufacture of channels in the core members and providing some sort of flexible connection with each individual core member to bring the temperature controlling medium across the sliding surfaces. Since the core members in some cases may be rather small (less than 10 mm in diameter) and since one holding device may easily comprise at least 100 core members this could be quite a cumbersome process. In such a tool, there would also be many possibilities for leakage of temperature controlling medium, which would then contaminate the chocolate.

Another advantage of the invention is that the cores are moveable in relation to the holding device by means of the opposite sliding surfaces. Thereby the cores can be lowered to many different depths in relation to the holding device and may for instance be adjusted to articles having different thickness without reducing the efficiency of heat transmission. The sliding surfaces may preferentially be essentially vertical.

Furthermore, the at least one core member may be countersunk into the holding device. Hereby, the sliding surfaces that provide the heat transmission from core to holding device constitute a larger part of the surface of the cores and very efficient heat transmission is achieved. An additional advantage of this embodiment is improved precision in the movement of the core in relation to the holding device due to the larger sliding surfaces.

According to a preferred embodiment, the system is provided with means adapted to control the temperature of the at least one core member. Such means comprises the temperature controlling medium and known type of means to control its temperature and/or flow. Such means can be laid out in many different ways and the invention is not restricted to any specific means as long as an essential constant temperature of the at least one core is achieved.

According to a particularly preferred embodiment, the at least one channel is arranged in a part of the holding device in close distance to the at least one core member. Close distance could for instance be less than 10 mm, the only restriction being that the part of the holding device that separates the channel from the core members remains strong enough. Hereby, an improved heat transmission from the core member to the temperature controlling medium is obtained, since the distance from the core member to the channel is very short.

The cross section of the at least one channel may be laid out in different ways, such as essentially circular or essentially rectangular. Thus, the walls of the channels may have fins or ribs or various depressions that would serve to increase the area of the walls, thereby improving the heat transmission.

By further making the cross section oblong, i.e. oval or ellipsoid in contrast to circular and rectangular in contrast to square, the contact surface of the channel is increased relative to its cross sectional area. This embodiment allows even higher transmission of heat energy from the holding device to the temperature controlling medium. The longer side of the oblong cross section of the at least one channel may preferentially face towards the at least one core member.

The sliding surfaces of the core member and holding device may also be provided with a heat-conduction compound, said heat-conduction compound being adapted to improve the transfer of heat from the independently suspended core members to the holding device. In order to allow the cores to slide, a certain tolerance between the cores and the holding device is required. By thus filling out this tolerance with a heat conduction compound, the heat transmission is improved greatly. Surprisingly the heat conduction compound has also been found to provide lubrication between the sliding surfaces.

The inventive idea also relates to core members made from a material with a high heat capacity and a high thermal conductivity such as essentially copper, essentially silver or essentially aluminium. Hereby two advantages are obtained. Firstly, a reservoir of cold can be built up in the cores and the temperature of the cores remain stable during immersion and idle periods. Secondly, heat energy is transferred rapidly from the warmer end of the cores, i.e. the end in contact with the chocolate-like mass, to the colder parts, which are in contact with the holding device.

According to an especially preferred embodiment the at least one core member is essentially solid. Thereby, an especially large cold reservoir can be built up in the cores which results in even more efficient cooling and thereby increased production speed of the whole system.

Finally, the at least one core member may be independently suspended from a holding device. By independent is meant that the suspension of one core member cannot affect the suspension of the other cores. Similarly, the suspension of one single core is not affected by the suspension of the other cores.

Hereby the additional advantage is obtained that the individual core members can be lowered to different depths to make all articles in a given mould element complete, irrespective of variations in the actual depth of the mould cavities or in the amount of deposited chocolate without affecting the efficiency of heat transmission. This provides unforeseen flexibility of the moulding system, which is capable of compensating for variations that are far greater than those actually experienced. If one mould cavity in a mould element contains significantly more liquid chocolate than the others, the core member associated with this mould cavity will simply stop its vertical travel before the other core members and due to the independence of the suspension the continued vertical travel of the remaining core members will not be affected. If on the other hand, significantly less chocolate has been deposited into a particular mould, the associated core will continue its vertical travel, independently of the other cores, to the point where this shell is also complete. The same will apply in case of a significantly deeper or less deep mould cavity. The bottom part of the shells may vary slightly in thickness.

The invention is explained more fully below with reference to particularly preferred embodiments as well as the drawings.
- Figure 1: is a schematic view of the steps performed to reach a packaged shell product.
- Figure 2: is a schematic view of a turning point of an endless carrier for the mould elements, carried through the steps of Figure 1.
- Figure 3: is a sectional view along A-A of the mould element of Figure 2.
- Figure 4: is an embodiment shown as a lateral, schematic, cross-sectional view through one of the core members comprising sliding surfaces and an associated, underlying mould cavity filled with chocolate.
- Figure 5: is a view of the same in a closed position, with the core member fully immersed into the chocolate mass.
- Figure 6: is a schematic, cross-sectional view through a holding device comprising by an upper and lower part, providing the channels for temperature controlling medium, and carrying several solid core members with sliding surfaces.
- Figure 7: is a schematic, cross sectional view through a holding device carrying several essentially solid core members and comprising a channel for temperature controlling medium, a heat conduction compound on the sliding surfaces.
- Figure 8: is a lateral, schematic, cross-sectional view through a holding device, carrying several independently suspended core members and underlying mould cavities, which are now filled with liquid mass.
- Figure 9: is a view of the same in a closed position.

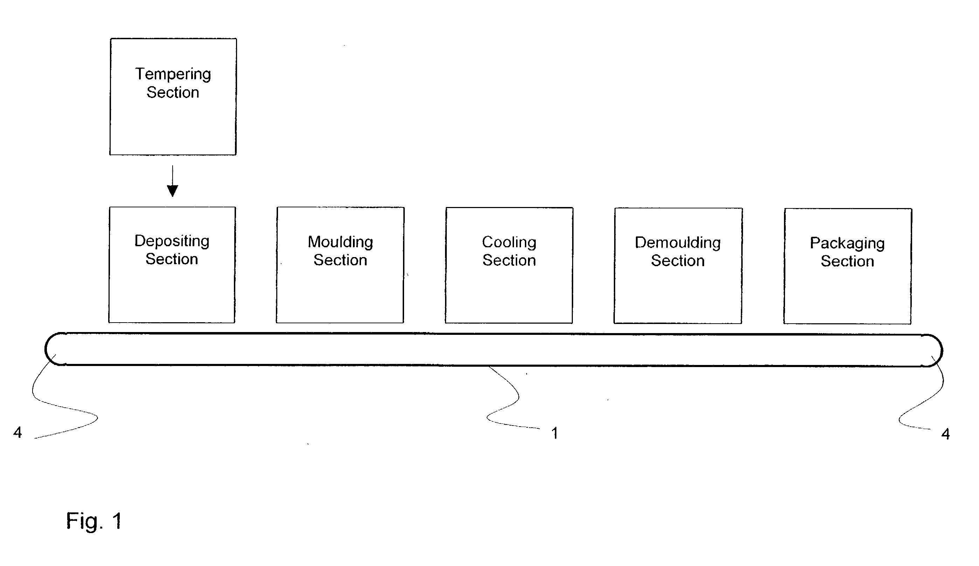

Steps to be performed for reaching a packed shell product is schematically disclosed in fig. 1.

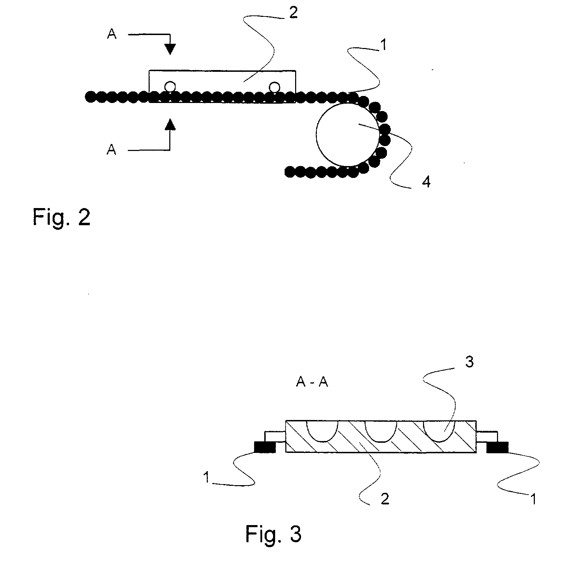

Between two turning points 4 an endless carrier belt 1 normally carries mould elements 2 through the depositing section, the moulding section, the cooling section, the demoulding section and finally to the packaging section. Thereafter, the endless carrier belt 1 returns the mould elements 2 to the depositing section. The moulding elements 2 may comprise one or even several mould cavities 3, as depicted in fig. 2 and 3.

Furthermore, it should be mentioned, that the fig. 1-3 disclose, that mould elements are moved continuously through the specific sections, such as the moulding section. In the moulding section, the moulding elements may be kept stationary when the associated core members are immersed, or the core members may be moved synchronously with the mould elements within the moulding section. Means for achieving such movements are well known to the skilled person within the art of chocolate making.

As described in EP 0 589 820 B1 (AASTED-MIKROVER APS) such systems comprise means for controlling the up and down movement of the core members as well as means for controlling the residence times of the core members in the fully immersed position, by the present invention especially to a predetermined time period. Furthermore, by the present invention, the residence times are typically lower than 60 seconds, though the invention is not restricted to such limitation. The residence times are more preferably lower than 20 seconds and are found to be especially expedient when between 0.1 and 5 seconds.

In the tempering section, the fat-containing, chocolate-like mass is normally tempered to a temperature of around 27-34°C having a content of stable β crystals. However, the actual temperatures as well as contents of stable β crystals depend on the choice of the skilled person for the chocolate-like mass in question. The tempered chocolate-like mass is delivered to the depositing section, in which the liquid mass is deposited into the mould cavity 3. In the moulding section to follow, a core member is immersed into the mass and the shell is actually moulded. Thereafter, a cooling section may follow, as well as a section for demoulding the shell from the mould, and finally a packaging section, in which the shells are packed for delivery. The systems of the present invention are subject of the moulding section.

It should be mentioned, that in the remaining drawings of this description, it is disclosed that the tempered mass 5 already has been deposited into the mould cavities 3, 3', 3".

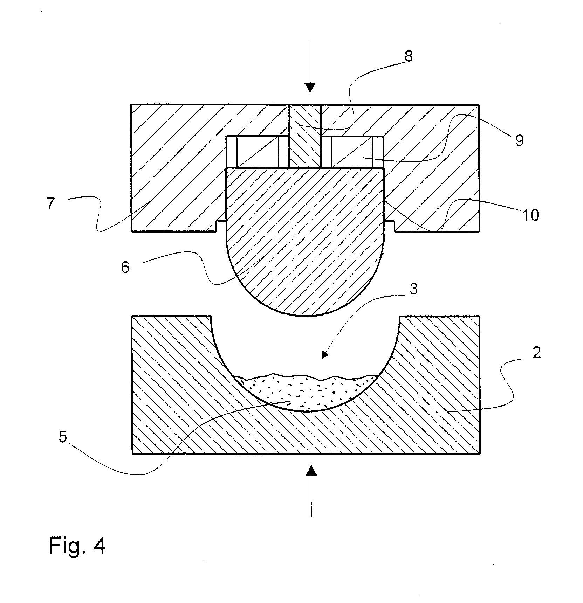

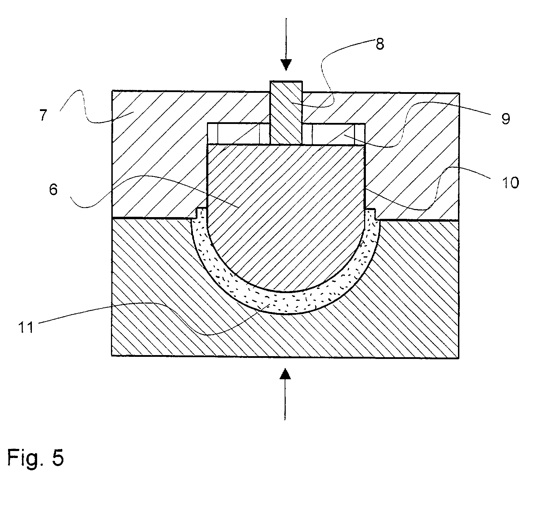

The basic structure of the moulding tool is disclosed schematically in Figure 4 and 5. For clarity, these Figures do not disclose the channel for the temperature controlling medium which should be imagined in the holding device 7. As disclosed in Figure 4 the core member 6 has sliding surfaces 10 adapted to support opposite sliding surfaces of the holding device 7, thereby providing guidance and a means for transmitting heat from the core 6 to the holding device 7. The geometric form of the part of the core that comprises the sliding surfaces could be laid out in very many different ways. The cross section could be essentially circular or essentially rectangular, but it should be stressed that the invention is not restricted to any specific geometric forms. Any form can be used as long as the surfaces are capable of sliding and as long as heat transmission across the sliding surfaces is possible.

Similarly, the distance that the core member 6 projects into the holding device 7 is not limited to any specific interval. The length of the sliding surfaces may typically be between 5 and 100 mm but other lengths may also be used. Again, it is only important that the surfaces can actually slide, transmit heat, and guide the movement of the core.

By this embodiment, the core member 6 is axially movably suspended from a holding device 7, which controls the movements of the core 6. By this embodiment, the closure means constitutes part of the holding device 7. The core member 6 is guided axially in relation to the holding device 7 by means of a known type of slide guidance 8. The suspension may typically comprise compressible spring means 9 of any kind. However, a pneumatic or hydraulic pressure effected at the top surface of the core member may create the appropriate suspension effect as well, either alone or in combination with the mentioned spring means 9.

It should be noted, that though not disclosed, the embodiment of fig 4-9 may comprise a separate mould cavity closure ring suspended from the holding device 7.

By moving the core member 6 down into the mass 5, the holding device 7 itself or the possibly intermediary closure ring comes to secure engagement with the upper surface of the mould element 2 as disclosed in fig. 5. By doing so, the core member 6 is immersed into the mass to achieve complete filling of the enclosed mould cavity, as the compression of the spring means 9 forces the core 6 in direction against the bottom of the mould cavity 3. Thereby complete shells 11 are produced.

According to a particularly preferred embodiment of the invention, means is arranged to control the temperature of the core member. This means could comprise well known temperature regulation devices such as a temperature measuring sensor connected via a wire to a control unit, which controls the regulation flow of a medium, which circulates in the channel in the holding device. However, these temperature regulation devices may be laid out in many different ways, such as comprising refrigeration or electrical heating, as long as they to the skilled person achieves an essentially constant temperature of the core member 6. The temperature of the core member could be controlled to be equal to or lower than 0°C, but could even be controlled to be higher than 0°C. An especially good quality of the shells as well as fast and efficient production has been achieved, when the temperature of the core member is controlled to be lower than around 10°C. Especially excellent results have been obtained, when the temperature of the core member is being controlled to be lower than -5°C.

Even the temperature of the mould cavity may be controlled, especially to between 10°C and 30°C. Thereby it has astonishingly been discovered, that a smooth outer surface of the shells is obtained without having any shrinks or depressions, such as the so called "Saturn" rings.

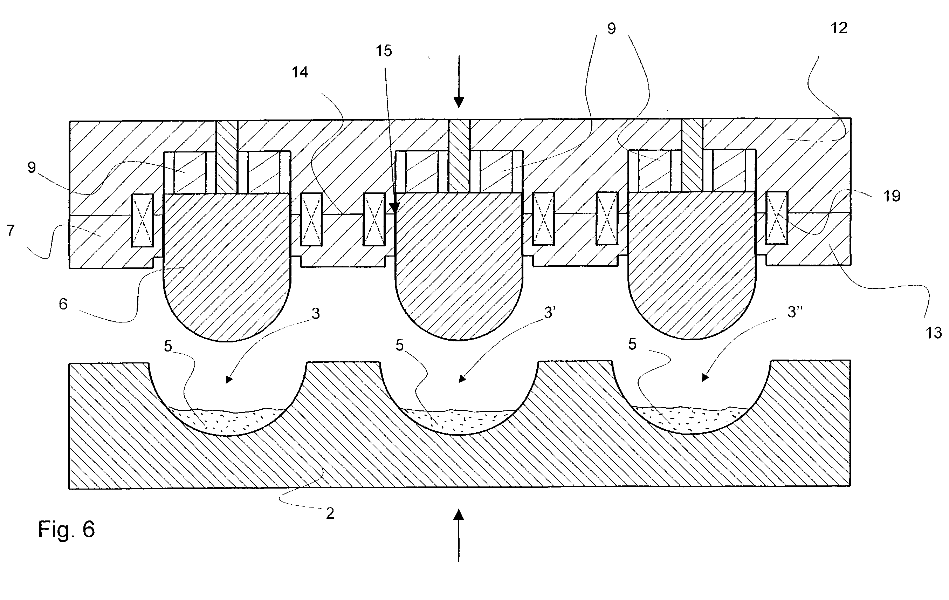

Figure 6 discloses schematically, how the channels 19 for the temperature controlling medium are provided in the holding device 7. The great advantage of the invention is that it provides a very simple and robust system for transmitting heat energy from the chocolate mass 5 to the temperature controlling medium yet having an unforeseen efficiency. Energy is transferred from the warm chocolate 5 via the core members 6, the sliding surfaces 10 between the core members 6 and the holding device 7, into the temperature controlling medium in the at least one channel 19 in the holding device. Thereby is avoided the need for bringing the temperature controlling medium in direct contact with the core members, which process would require the manufacture of channels in the core members and providing some sort of flexible connection with each individual core member to bring the temperature controlling medium across the sliding surfaces. Since the core members may be rather small (less than 10 mm in diameter) and since one holding device may easily comprise at least 100 core members this could be quite a cumbersome process. In such a tool, there would also be many possibilities for leakage of temperature controlling medium, which would then contaminate the chocolate.

The channels 19 in the holding device may be manufactured by drilling channels in the holding device. Another way of providing the channels is also disclosed schematically in Figure 6. Grooves may be milled in two plates, the upper 12 and lower 13 part of the holding device, which may afterwards be assembled by joining their faces 14 by known methods to form the complete holding device 7.

The channels 19 in the holding device may advantageously be provided in close distance 15 from the core members 6. The closer the channels 19 get to the core member 6 the more efficient the heat transmission from core to temperature controlling medium, the only restriction being that the material constituting the distance 15 should be strong enough.

According to another embodiment, the channels 19 may be essentially circular or essentially rectangular. The walls of the channels may also be provided with ribs or depressions to increase their area. By making the cross section of the walls oblong, i.e. oval or ellipsoid as compared to circular or rectangular as compared to square, the ration of circumference to cross sectional area is increased and improved heat transmission is obtained. The oblong cross section should preferentially be provided close to the core members 6.

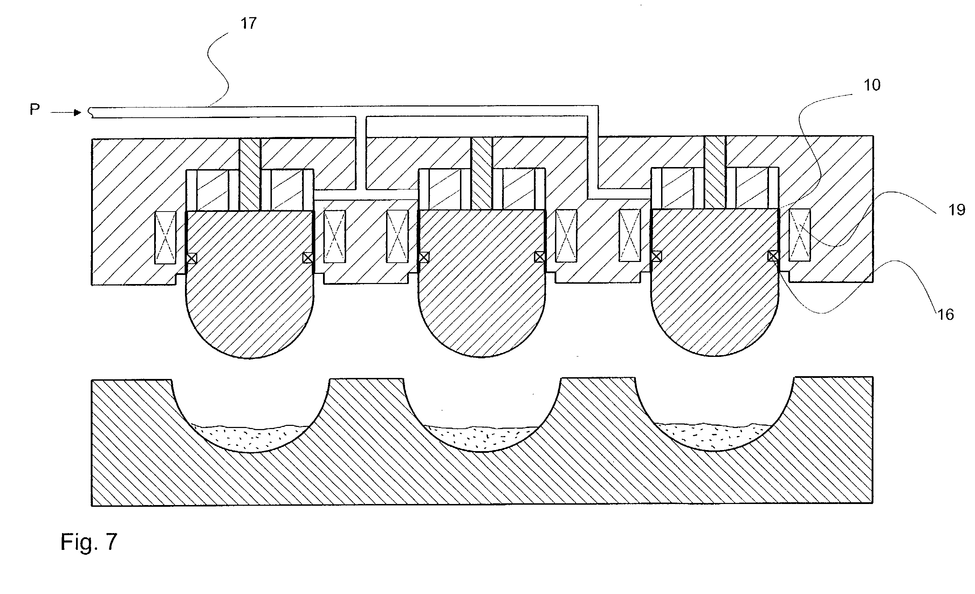

As disclosed schematically in Figure 7, the sliding surfaces 10 may be provided with a heat conduction compound. In order to allow the cores to slide, a certain tolerance between the cores and the holding device is required. By thus filling out this tolerance with a heat conduction compound, the heat transmission is improved greatly. The heat conduction compound should preferentially be of a type with a high thermal conductivity and it should have a temperature range that includes the temperatures used for the sliding surfaces. In addition, the compound should be compatible with the material chosen for the holding device 7 and the core members 6. Such heat conduction compounds are common and one suitable compound is the HEAT CONDUCTION COMPOUND from Danfoss (Denmark). Surprisingly the heat conduction compound has also been found to provide lubrication between the sliding surfaces.

In some embodiments, a pneumatic or hydraulic pressure is actuated between the top of the core members 6 and the opposite surfaces of the holding device 7. Such an embodiment is disclosed schematically in Figure 7 where the pressure is provided through a channel 17. In these embodiments, a seal may be provided on the holding device or advantageously on the core members. The great advantage of the seal is to prevent the heat conduction compound from being pressed out on to the parts of the core member that get in contact with the chocolate, and to seal the chamber above the core member efficiently to allow the build up of pneumatic or hydraulic pressure.

Very many different embodiments of the seal can be used and the invention is not restricted to any specific profile or material as long as an efficient seal is provided. In many cases a simple o-ring may suffice, but it has been found advantageous to use seals with a special profile such as the four lipped seals (Quad-Ring® seal) provided by Busak+Shamban. The material should be chosen with due consideration of the compatibility between the heat conduction compound and the seal.

The inventive idea also relates to core members made from a material with a high heat capacity and a high thermal conductivity such as essentially copper, essentially silver or essentially aluminium. Hereby two advantages are obtained. Firstly, a reservoir of cold can be built up in the cores and the temperature of the cores remain stable during immersion and idle periods. Secondly, heat energy is transferred rapidly from the warmer end of the cores, i.e. the end in contact with the chocolate-like mass, to the colder parts, which are in contact with the holding device.

According to an especially preferred embodiment the at least one core member is essentially solid. Thereby, an especially large cold reservoir can be built up in the cores which results in even more efficient cooling and thereby increased production speed of the whole system.

Preferentially, the top part is essentially free of channels with the purpose of controlling the temperature of the core member as is the core member itself essentially free of such channels as well.

Actually, this inventive idea is so general that it also relates to core members that are firmly fixed to a holding device where channels for temperature controlling medium can be made in the core member. Experimental data show that the working temperature of an essentially solid core member can be kept lower than the working temperature of a core member in which cooling medium flows, all other factors (temperature of cooling medium, core material, dimension of core) remaining equal. For one specific core dimension, where the temperature of the temperature controlling medium was set to -12 to -14°C, the working temperature of an essentially solid aluminium core was 4.5°C lower than the temperature of an aluminium core with temperature controlling medium flowing in the core.

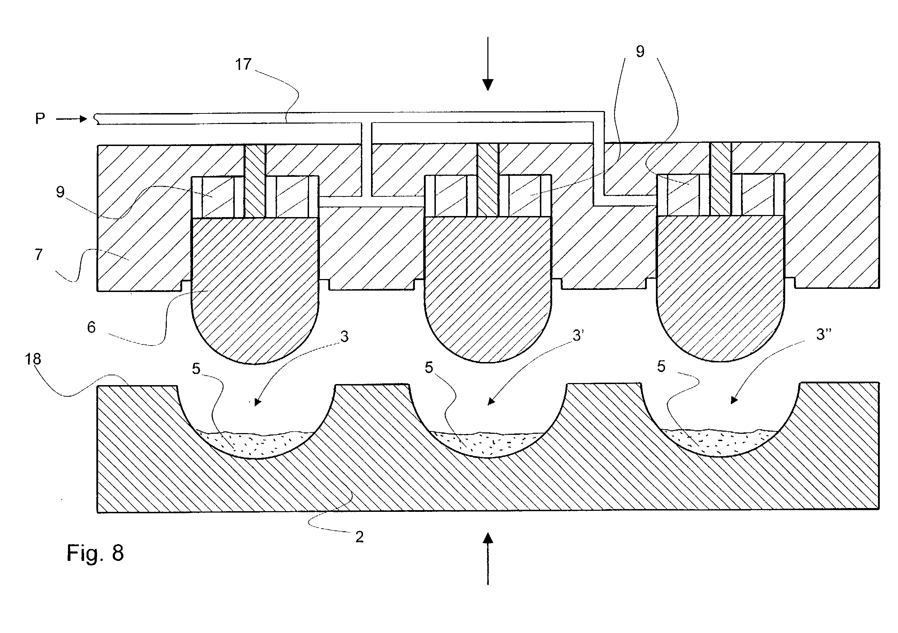

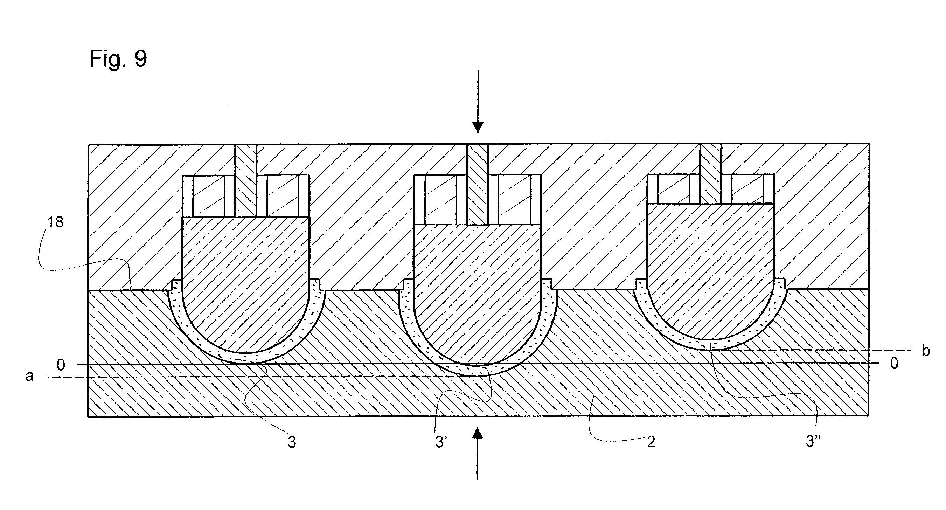

By the embodiment of fig. 8 and 9 the system comprises more than one core member 6. By the disclosed example the system comprise three core members 6 guided by the same holding device 7, and three underlying mould cavities 3, 3', 3" in a mould element 2. However, the specific numbers of mould cavities and associated core members are unlimited within this aspect of the invention. For clarity, the at least one channel for temperature controlling medium has not been shown in this case.

Important is, that the holding device 7 comprises more than one core member, by which at least two are independently suspended from the holding device. Thereby is obtained the unexpected advantage, that essentially the same predetermined pressureforce may be obtained in every mould cavity 3, 3" 3" whatever the actual depth of the specific cavity may be under the upper surface 18 of the mould element 2. By achieving this, one is sure, that the deposited amount of mass in every cavity 3, 3', 3" of the mould element completely fills out the specific mould cavity when all the core members 6 are immersed at the same time as depicted in fig. 9.

As schematically shown in fig. 8, every mould element normally always exhibits different depths of the specific mould cavities from the top surface 18 of the mould element. The differences may typically be up until around 1mm in deviation - plus (a) as depicted by the cavity 3' or minus (b) as depicted by the cavity 3" from the actually desired depth depicted by the cavity 3. Such inaccuracies in the mould elements are well-known.

Furthermore, the actually deposited amount of mass in each cavity becomes more or less irrelevant as each core member 6 simply automatically adapts its immersing depth in accordance herewith always obtaining, that the specific mould cavity in question becomes completely filled out with mass. In fig. 9. it is shown, that in the closed position of the system, the core member of the cavity 3' has moved distance a further down than the core member of the first cavity 3, and that the core member of the cavity 3" has stopped a distance b before reaching the position of the core member of the first cavity 3, yet still securing total filling of each cavity. By the prior art where the core members were all fixed to the holding device the positions of the immersed core members always remained the same in relation to the mould cavities, what ever the actual depth of the cavity may be or the deposited amount of mass may be. The result was, that unacceptable variations in the appearance, the thickness as well as homogeneity occurred.

At disclosed by the channels 17, a pneumatic or hydraulic pressure may advantageously be brought to the top of each core member thereby obtaining the same pressureforce for each of the shells moulded in the mould element at the same time. The applied pneumatic pressure could for example be lower than 10 bar.

By the embodiment of fig. 8, 9 an especially fast and productive system for shell making is available, yet providing an unforeseen high quality of the complete batch of shells produced.

## Claims

1. A system for the production of shells of fat-containing, chocolate-like masses, in particular for chocolate articles,
comprising at least one mould cavity (3, 3', 3") to receive the mass (5),
at least one core member (6, 6', 6") to be immersed into the mass,
a holding device (7) adapted to engage the at least one core member,
characterized in that
at least one channel (19) is provided in the holding device, in which temperature controlling medium flows, and
that the at least one core member has sliding surfaces (10) that are supported by opposite sliding surfaces (10) of the holding device.

2. A system according to claim 1, whereby the sliding surfaces (10) are essentially vertical.

3. A system according to claim 1, whereby the at least one core member (6, 6', 6") is countersunk into the holding device (7).

4. A system according to claim 1, comprising means adapted to control the temperature of the at least one core member (6, 6', 6").

5. A system according to claim 1, whereby the at least one channel (19) is arranged in a part of the holding device (7) in close distance (15) to the at least one core member (6, 6', 6").

6. A system according to claim 1, whereby the cross section of the at least one channel (19) is essentially circular in at least part of the channel.

7. A system according to claim 1, whereby the cross section of the at least one channel (19) is essentially rectangular in at least part of the channel.

8. A system according to claim 1, whereby the cross section of the at least one channel (19) is oblong in at least part of the channel.

9. A system according to claim 8, whereby the longer side of the oblong cross section of the at least one channel (19) faces towards the at least one core member 86, 6', 6").

10. A system according to claim 1, comprising a heat-conduction compound at the sliding surfaces (10),
said heat-conduction compound being adapted to improve the transmission of heat from the at least one core member (6, 6', 6") to the holding device (7).

11. A system according to claim 1, comprising core members (6, 6', 6") made essentially from copper.

12. A system according to claim 1, comprising core members (6, 6', 6") made essentially from silver.

13. A system according to claim 1, comprising core members (6, 6', 6") made essentially from aluminium.

14. A system according to claim 1, whereby the at least one core member (6, 6', 6") is essentially solid.

15. A system according to claim 1, whereby the at least one core member (6, 6', 6") is essentially free from channels.

16. A system according to claim 1, whereby more than one core member (6, 6', 6") is independently suspended from a holding device (7).

17. A holding device for a system for the production of shells of fat-containing, chocolate like masses, in particular for chocolate articles, which holding device is adapted to engage at least one core member,
characterized in that,
at least one channel is provided in the holding device, in which temperature controlling medium flows,
and that
the holding device has sliding surfaces (10) adapted to support opposite sliding surfaces (10) of at least one core member (6, 6', 6").

18. A holding device according to claim 17, comprising means adapted to provide independent suspension of more than one core member (6, 6', 6").

## Patentansprüche

1. Vorrichtung zur Herstellung von Schalen aus fetthaltiger, schokoladeartiger Masse, insbesondere für Artikel aus Schokolade,
mit mindestens einem Formenhohlraum (3, 3', 3") zum Aufnehmen der Masse (5), mindestens einem Kernelement (6, 6', 6") zum Eintauchen in die Masse,
einer Haltevorrichtung (7) zur Verbindung mit dem mindestens einen Kernelement,
dadurch gekennzeichnet,
dass die Haltevorrichtung mit mindestens einem Kanal (19) versehen ist, worin ein Medium zur Temperaturregulierung fliesst, und
dass das mindestens eine Kernelement Gleitoberflächen (10) hat, die von gegenüberliegenden Gleitoberflächen (10) der Haltevorrichtung gestützt sind.

2. Vorrichtung gemäss Anspruch 1, wobei die Gleitoberflächen (10) im wesentlichen vertikal sind.

3. Vorrichtung gemäss Anspruch 1, wobei das mindestens eine Kernelement (6, 6', 6") in der Haltevorrichtung (7) versenkt ist.

4. Vorrichtung gemäss Anspruch 1, mit einer Vorrichtung zum Regeln der Temperatur des mindestens einen Stempels (6, 6', 6").

5. Vorrichtung gemäss Anspruch 1, wobei der mindestens eine Kanal (19) in einem Teil der Haltevorrichtung (7) in kurzer Entfernung (15) zu dem mindestens einen Kernelement (6, 6', 6") angeordnet ist.

6. Vorrichtung gemäss Anspruch 1, wobei der Querschnitt des mindestens einen Kanals (19) zumindest in einem Teil des Kanals im wesentlichen rund ist.

7. Vorrichtung gemäss Anspruch 1, wobei der Querschnitt des mindestens einen Kanals (19) zumindestens in einem Teil des Kanals im wesentlichen rechtwinklig ist.

8. Vorrichtung gemäss Anspruch 1, wobei der Querschnitt des mindestens einen Kanals (19) zumindestens in einem Teil des Kanals rechteckig ist.

9. Vorrichtung gemäss Anspruch 1, wobei die längere Seite des rechteckigen Querschnitts des mindestens einen Kanals (9) in Richtung des mindestens einen Kernelements (6, 6', 6") weist.

10. Vorrichtung gemäss Anspruch 1, mit einem wärmeleitenden Material an den Gleitoberflächen (10), wobei dieses wärmeleitende Material die Wärmeleitung zwischen dem mindestens einem Kernelement (6, 6', 6") und der Haltevorrichtung (7) verbessert.

11. Vorrichtung gemäss Anspruch 1, mit Kernelement (6, 6', 6"), die im wesentlichen aus Kupfer bestehen.

12. Vorrichtung gemäss Anspruch 1, mit Kernelement (6, 6', 6"), die im wesentlichen aus Silber bestehen.

13. Vorrichtung gemäss Anspruch 1, mit Kernelement (6, 6', 6"), die im wesentlichen aus Aluminium bestehen.

14. Vorrichtung gemäss Anspruch 1, wobei das mindestens eine Kernelement (6, 6', 6") im wesentlichen massiv ist.

15. Vorrichtung gemäss Anspruch 1, wobei das mindestens eine Kernelement (6, 6', 6") im wesentlichen frei von Kanälen ist.

16. Vorrichtung gemäss Anspruch 1, wobei mehr als ein Kernelement (6, 6', 6") unabhängig an einer Haltevorrichtung (7) aufgehängt ist.

17. Haltevorrichtung zur Herstellung von Schalen aus fetthaltiger, schokoladeartiger Masse, insbesondere für Artikel aus Schokolade, mit einer Haltevorrichtung zur Verbindung mit dem mindestens einen Kernelement,
dadurch gekennzeichnet,
dass die Haltevorrichtung mit mindestens einem Kanal (19) versehen ist, worin ein Medium zur Temperaturregulierung fliesst, und
dass die Haltevorrichtung Gleitoberflächen (10) zum Stützen von Gleitoberflächen (10) mindestens eines Kernelements aufweist.

18. Haltevorrichtung gemäss Anspruch 17, mit Vorrichtungen zum unabhängigen Aufhängen von mehr als einem Kernelement (6, 6', 6").

## Revendications

1. Systeme pour la fabrication de coquilles de masses contenant des matières grasse, de type chocolat en particulier pour des articles en chocolat, comprenant au moins une cavité mould (3, 3', 3") pour recevoir la masse (5) au moins un noyau du moule (6, 6', 6") puis à être immergés dans la masse suspension (7) adapté pour engage au moins un noyau du moule
caractérisé en ce que au moins une tube (19) est fournisé dans la suspension dans lequel agent de control de temperature coule et
que au moins une noyau du moule auras plataux glissants (10) supporté par les plataux glissant antagonistes (10) du suspension.

2. Systeme selon revendication 1 où les plateau glissants (10) est en effect vertical.

3. Systeme selon revendication 1 où au moins un noyau de moule (6, 6', 6") est submergé dans la suspension (7).

4. Systeme selon revendication 1 comprenant agents adaptée pour controller le temperature d'au moins un noyau de moule (6, 6', 6").

5. Systems selon revendication 1 où au moins une tube (19) est arrangée dans un part de la suspension (7) en proche distance (15) pour au moins un noyau de moule (6, 6', 6").

6. Systeme selon revendication 1 où la section transvers d'au moins une tube (19) est essentiellement circulaire dans au moins un part de la tube.

7. Systeme selon revendication 1 où la section transvers d'au moins une tube (19) est essentiellement rectanculaire dans au moins un part de la tube.

8. Systeme selon revendication 1 où la section transvers d'au moins une tube (19) est essentiellement oblong dans au moins un part de la tube.

9. Systeme selon revendication 8 où le côté plus longue de la section transvers oblongue d'au moins un face de la tube (19) face au au moins un noyau de moule (6, 6', 6").

10. Systeme selon revendication 1 comprenant d' un conducteur de chaleur aux plateaux glissantes (10),
le nommée conducteur de chaleur soit adaptée pour améliorer la transmission de chaleur d'au moins un noyau de moule (6, 6', 6") pour la suspension (7).

11. Systeme selon revendication 1 comprenant noyaux de moule (6, 6', 6") fabrique en cuire.

12. Systeme selon revendication 1 comprenant noyaux de moule (6, 6', 6") fabrique en argent.

13. Systeme selon revendication 1 comprenant noyaux de moule (6, 6', 6") fabrique en aluminium.

14. Systeme selon revendication 1 comprenant noyaux de moule (6, 6', 6") est essentiellement solide.

15. Systeme selon revendication 1 où au moins un noyau de moule (6, 6', 6") est essentiellement libre de tubes.

16. Systeme selon revendication 1 où plus qu'un noyau de moule (6, 6', 6") est discontinu independement de la suspension (7).

17. Suspension pour une systeme pour la fabrication de coquilles de masses contenant des matières grasse, de type chocolat en particulier pour des articles en chocolat où la suspension est adaptée pour engage au moins un noyau de moule
Caractérisé en ce que au moins une tube (1) est fournisé dans la suspension dans lequel l'agent de control de temperature coule et
que au moins une noyau du moule auras plataux glissants (10) supporté par les plataux glissant antagonistes (10) de la suspension.

18. Suspension selon revendication 17, comprenant agents adapter de pourvue discontinuation independante pour plus qu'un noyau de moule (6, 6', 6").
